# EUROPEAN PATENT SPECIFICATION

(11) **EP 0 481 748 B1**
(45) Date of publication and mention of the grant of the patent: **26.07.1995**
(21) Application number: 91309517.0
(22) Date of filing: 16.10.1991
(51) Int. Cl.: C08F 10/00, C08F 4/646

(54) **Olefin polymerization catalyst**
Katalysator für Olefinpolymerisation
Catalyseur de polymérisation d'olefines

(30) Priority: 18.10.1990 US 599539
(43) Date of publication of application: 22.04.1992
(73) Proprietor: SHELL OIL COMPANY, Houston Texas 77002 (US)
(72) Inventor: Job, Robert Charles, Houston, Texas 77077 (US)
(74) Representative: Cresswell, Thomas Anthony

(56) References cited:
- EP-A- 0 236 082
- US-A- 4 540 679

## Description

This invention relates to a granular magnesium-containing solid which can be used to produce a high activity polymerization catalyst and to a process of polymerizing olefins which employs that catalyst.

The production of polymers, that is homopolymers and copolymers, of lower α-olefins is of substantial commercial significance. The polymers are relatively inexpensive and have commercially useful properties. In the case of ethylene, the process is uncomplicated by the manner in which the ethylene molecules add to the growing polymeric chain and the product does not exist in stereoisomeric forms.

In the case of propylene, however, the presence of methyl groups on the polymeric chain results in several product types depending upon the stereoregularity with which the propylene molecules add to the growing chain. Much of the commercial polypropylene is crystalline and results from the stereoregular addition of propylene molecules in head-to-tail manner. Polymer resulting from the addition of propylene units in a random and irregular manner is termed atactic. This amorphous form is less desirable and usually must be removed as by an extraction step in order to provide the more desirable crystalline polymer.

Also significant is the activity of the polymerization catalyst. The early trivalent titanium, chromium or vanadium polymerization catalysts were of low activity and the polymeric product contained significant proportions of catalyst residues. The removal of such residues as by a deashing step was required.

More recent olefin polymerization catalysts are stereoregulating and sufficiently active that extraction and/or deashing steps are not required. In the terms now employed conventionally to describe such catalysts, the high activity olefin polymerization catalysts are formed from a procatalyst which typically contains magnesium, titanium and halogen moieties, a cocatalyst which is typically an organoaluminum compound, and a selectivity control agent (SCA). Although each component has a significant influence on the polymerization process and the product produced thereby, the catalyst as well as the polymer product seems to be most influenced by the nature of the procatalyst. Much research has been directed toward improvement of the procatalyst.

US-A-4,330,649 describes a solid catalyst component obtained by heating a soluble magnesium compound such as magnesium chloride with a higher alcohol in the presence of an ester to produce a solution which is added to titanium tetrachloride and an electron donor (ED) to form the procatalyst. US-A-4,472,521 describes reacting a magnesium alkoxide with a titanium alkoxide, in the presence of aromatic hydrocarbon. TiCl₄ and an ED are added to the resulting solution to produce a solid procatalyst which is post-treated with transition metal halide.

Many attractive olefin polymerization procatalysts are produced from magnesium alkoxides wherein the alkoxide moieties have 1 or 2 carbon atoms. Magnesium ethoxide is an attractive procatalyst precursor but its use poses a problem in that, unlike other magnesium alkoxides, it is not readily soluble in the corresponding alkanol, i.e. ethanol. Measures have been proposed for the solubilization of magnesium alkoxide including the formation of complex magnesium ethoxides as disclosed in US-A-4,710,482.

Procedures have been disclosed which involve the solubilization of Mg(OC₂H₅)₂ by reaction with CO₂ in ethanol. US-A-4,540,679 describes the production of an olefin polymerization catalyst component by contacting a suspension of Mg(OC₂H₅)₂ in ethanol with CO₂. Organoaluminum compound in hydrocarbon solution is added to produce particles employed as a support for the titanium species which result from contacting the particles with TiCl₄. US-A-4,728,705 describes reacting MgCl₂ in ethanol with CO₂ to form a solution. This solution is spray dried to produce particles or alternatively is used to impregnate carrier particles. The particles are useful in the production of an olefin polymerization procatalyst of desirable morphology.

The reaction of Mg(OC₂H₅)₂ with CO₂ in ethanol produces a soluble complex containing moieties of magnesium, ethoxide and carbon monoxide which is often referred to as carbonated magnesium ethoxide or CMEO. The precise structure of the complex is uncertain but a low pressure stable form is believed to be illustrated by the formula

Mg₂(OEt)₄(CO₂)₃ (I)

and the complex is soluble in ethanol. Although the above references teach methods of converting this CO₂-containing complex to olefin polymerization procatalysts and thence to olefin polymerization catalysts, it would be of advantage to provide improved olefin polymerization procatalysts and catalysts from the carbonated magnesium ethoxide complex.

The present invention relates to an improved olefin polymerization catalyst and to a process of polymerizing lower α-olefins in the presence of such catalyst. More particularly, the invention relates to a procatalyst precursor of such olefin polymerization catalyst and to the production thereof from carbonated magnesium ethoxide.

The present invention accordingly provides a granular magnesium-containing solid comprising a reaction product of a carbonated magnesium ethoxide and a phenolic compound having 1 or 2 aromatic rings and 1 or 2 electron withdrawing groups as ring carbon atom substituents. This solid is produced by reaction of CMEO and certain phenolic compounds of enhanced acidity. The resulting, usually spheroidal, solid can be heated, for example in an inert diluent to produce a polymerization procatalyst precursor. The precursor can then be contacted with a halide of tetravalent titanium, a halohydrocarbon and an ED to produce a procatalyst as spheroidal particles. Contacting the procatalyst with an organoaluminum compound cocatalyst and an SCA produces an olefin polymerization catalyst useful in the polymerization of lower α-olefins to polymeric products having a relatively narrow particle size distribution.

The production of a CMEO solution in ethanol is known from US-A-4,540,679 and US-A-4,728,705. The process of producing a CMEO solution comprises passing CO₂ into a slurry of Mg(OC₂H₅)₂ in ethanol as by bubbling the gaseous CO₂ through the slurry or by adding dry ice. The Mg(OC₂H₅)₂ is "solubilized" by the CO₂ and ethanol, probably through the formation of a complex carbonated alcoholate of the general formula

Mg(OEt)₂(CO₂)ₓ (II)

wherein x is an average number between 1 and about 2 inclusive. The carbonated complex is soluble in ethanol and the course of the interaction can be followed by observing the disappearance of the insoluble magnesium ethoxide.

The CMEO is then contacted with a phenolic compound selected from phenol or a substituted phenol whose acidity has been enhanced by the presence of an electron withdrawing group as a substituent on a phenolic ring carbon atom. The class of electron withdrawing groups is known in the art and comprises those groups whose presence as an aromatic ring substituent causes sufficient electron withdrawal to reduce the pKa of the substituted phenolic compound, in aqueous solution, below a value of about 9.9. Suitable electron withdrawing groups include nitro, cyano, chloro, bromo, carboxy, carboalkoxy, formyl and alkoxy, but does not include hydroxy or alkyl. The preferred electron withdrawing groups are free of active hydrogens. Particularly preferred is the nitro group.

The phenolic compounds of enhanced acidity have 1 or 2 aromatic rings with 1 or 2 electron withdrawing groups as above described which are preferably located on ring carbon atoms which are ortho or para relative to the phenolic hydroxyl group. Suitable phenolic compounds include o-nitrophenol, p-nitrophenol, p-chlorophenol, p-hydroxybenzaldehyde, 2-ethoxyphenol, p-cyanophenol, 4-carbethoxyphenol, 4-acetyloxyphenol, 2-carbomethoxyphenol, 2,4-dinitrophenol, 2-nitro-1-hydroxynaphthalene and 4-cyano-1-hydroxynaphthalene. Preferred phenols of enhanced acidity have 1 aromatic ring and 1 substituent group and are nitrophenols, particularly p-nitrophenol.

The CMEO and the phenolic compound are suitably contacted at a moderate temperature in an inert diluent in which the CMEO and phenolic compound are soluble but the reaction product thereof is insoluble. Suitable diluents include alkanols, especially ethanol, aromatic hydrocarbons such as benzene, toluene and xylene, aromatic halohydrocarbons such as chlorobenzene, dichlorobenzene and bromobenzene, alkoxysilanes including tetramethoxysilane, tetraethoxysilane and trimethoxypropoxysilane. Mixtures of such diluents can be used. Alkanols are preferred as the diluents.

The contacting suitably takes place at a temperature from 15°C to 30°C, and the mixing can be facilitated by conventional procedures such as shaking or stirring. The resulting product is a granular insoluble solid. This solid is an adduct of the CMEO and a moiety of the phenolic compound and can be represented by the general formula

Mg(O₂C)(OEt)(A) · EtOH (III)

wherein A is a phenoxide anion illustratively obtained by loss of the acidic hydrogen from the phenolic compound of enhanced acidity.

An olefin polymerization procatalyst precursor is obtainable by heating the granular solid, for example in a high boiling point inert diluent, i.e a diluent which has an atmospheric boiling point above 80°C and preferably above 100°C. Aromatic halohydrocarbons and the tetraalkoxysilanes are preferred inert diluents. The granular solid can be heated in the diluent of its production until effervescence takes place. Alternatively, when a relatively low boiling diluent is employed in the production of the granular solid the solid can be recovered as by filtration or decantation, mixed with the high boiling diluent and heated until effervescence takes place. The effervescence results from the loss of at least a portion of the CO₂ and/or ethanol present in the CMEO/phenolic compound adduct. When the effervescence has diminished or ceased, the resulting solid procatalyst precursor can be recovered as by filtration or decantation. This solid procatalyst precursor is typically washed with a light hydrocarbon such as isooctane and dried, although the recovered solid may be used without additional treatment.

An olefin polymerization procatalyst is obtainable by contacting the solid procatalyst precursor with a halide of tetravalent titanium, an optional halohydrocarbon and an ED. The halide of tetravalent titanium is suitably an aryloxy- or alkoxy- di- or tri-halide such as diethoxytitanium dichloride, dihexyloxytitanium dibromide, isopropoxytitanium trichloride or phenoxytitanium trichloride or is a titanium tetrahalide such as TiCl₄ or TiBr₄. A titanium tetrahalide is preferred as the halide of tetravalent titanium and particularly preferred is TiCl₄.

The optional halohydrocarbon suitably has up to 12 carbon atoms, preferably of up to 9 carbon atoms, and contains at least one halogen atom, preferably chlorine or bromine, and in the case of aliphatic halohydrocarbons contains at least 2 halogen atoms. Suitable aliphatic halohydrocarbons are CH₂Cl₂, CH₂Br₂, CHCl₃, CCl₄, 1,2-dibromoethane, 1,1,3-trichloropropane, trichlorocyclohexane, dichlorofluoromethane and tetrachloroisooctane. Suitable aromatic halohydrocarbons include chlorobenzene, bromobenzene, dichlorobenzene and chlorotoluene. Of the aliphatic halohydrocarbons, CCl₄, and 1,1,2-trichloroethane are preferred but particularly preferred is the aromatic halohydrocarbon chlorobenzene.

The ED which is used to prepare the procatalyst can be any electron donor conventionally employed in titanium-based olefin polymerization procatalysts including ethers, esters, ketones, amines, imines, nitriles, phosphines, stibines, arsines and alcoholates. The preferred ED is an ester, particularly aliphaticesters of aromatic mono-carboxylic or dicarboxylic acids. Preferred electron donors are ethyl benzoate, ethyl p-ethoxybenzoate, ethyl p-methylbenzoate, and diisobutyl phthalate. The ED can be used as a single compound or as a mixture but preferably is provided as a single compound. Ethyl benzoate and diisobutyl phthalate are particularly preferred.

The manner by which the solid precursor, halide of tetravalent titanium the halohydrocarbon and the ED are contacted is generally conventional. Thus, the procatalyst precursor and the halide of tetravalent titanium can be mixed and the ED subsequently added to the resulting mixture. In a preferred modification, the ED and procatalyst precursor are mixed with a mixture of a halide of tetravalent titanium and halohydrocarbon and the resulting solid is washed one or more additional times with the mixture of a halide of tetravalent titanium and halohydrocarbon. The initial contacting of ED, procatalyst precursor and halide of tetravalent titanium/halohydrocarbon mixture suitably is conducted at a temperature from ambient to 150°C. Initial contacting temperatures from 80°C to 130°C are preferred. Sufficient halide of tetravalent titanium is employed to convert at least a substantial proportion of the anions of the solid procatalyst precursor to halide moieties. This conversion can be conducted in one or more operations, each of which can be conducted over a period of time ranging from a few minutes to several hours. During each contacting with a halide of tetravalent titanium a portion of the halohydrocarbon is typically present and on some occasions an acid halide such as benzoyl chloride or phthaloyl chloride is present. The molar ratio of ED to magnesium in the procatalyst precursor suitably is from 0.01:1 to 10:1, but preferably is from 0.06:1 to 0.4:1. The procatalyst, preferably obtained as spherical particles, is typically finished by a final wash with a light hydrocarbon and drying under nitrogen. The procatalyst so obtained is storage stable so long as oxygen and active hydrogen compounds are excluded. Alternatively, however, the procatalyst can be used directly from the hydrocarbon wash without drying. The procatalyst can then be used in the production of an olefin polymerization catalyst by contacting the procatalyst with an organoaluminum cocatalyst and a selectivity control agent.

The cocatalyst is an organoaluminum compound selected from the aluminum-based cocatalysts conventionally employed with titanium-based procatalysts. Illustrative organoaluminum compounds are trialkylaluminum compounds, alkylaluminum alkoxide compounds and alkylaluminum halide compounds wherein each alkyl independently has from 2 to 6 carbon atoms inclusive. The preferred organoaluminum compounds are halide-free and particularly preferred are the trialkylaluminum compounds such as triethylaluminum and triisobutylaluminum. Triethylaluminum is especially preferred. Sufficient cocatalyst provides a ratio of aluminum atoms to titanium atoms in the procatalyst from 1:1 to 150:1 but preferably from 10:1 to 100:1.

The SCA which is employed can be any conventionally employed in conjunction with titanium-based procatalysts and organoaluminum cocatalysts, including an ED listed above for use in procatalyst production but also including organosilane compounds such as alkoxysilanes of the formula

R′ᵣSi(OR)₄₋ᵣ

wherein R′ is alkyl or aryl of up to 10 carbon atoms inclusive, R is alkyl of up to 4 carbon atoms and r is 1 or 2. A preferred SCA is an ester, particularly an alkyl ester of aromatic monocarboxylic and dicarboxylic acids or is an alkylalkoxysilane. Preferred esters are ethyl p-ethoxybenzoate, diisobutyl phthalate, ethyl benzoate and ethyl p-methyl-benzoate and preferred alkylalkoxysilanes are diisobutyldimethoxysilane, isopropyltrimethoxysilane and cyclohexylmethyldimethoxysilane. Sufficient SCA provides a quantity of from 0.01 to 100 moles, preferably from 0.5 to 10 moles, SCA per mole of titanium in the procatalyst. The SCA is typically provided as a separate material but alternatively in certain embodiments the ED provided during procatalyst production may also serve as SCA without the additional of additional material.

The components of the olefin polymerization catalyst are usefully contacted by mixing in a suitable reactor outside the system in which lower α-olefin is to be polymerized and the catalyst thereby produced is subsequently introduced into the polymerization reactor. Alternatively, the catalyst components can be introduced separately into the polymerization reactor where the polymerization catalyst is formed in situ.

The olefin polymerization catalyst as formed from the CMEO/phenolic compound adduct by way of the solid procatalyst is useful in the polymerization of lower α-olefins and particularly in the polymerization of straight-chain α-olefins of up to 4 carbon atoms inclusive, i.e. ethylene, propylene or 1-butene. The precise procedures of polymerization are conventional but olefin polymerization carried out in accordance with the present invention provides polymeric product having good properties including a relatively high bulk density and a relatively narrow particle size distribution. The activity and stereospecificity of the catalyst are such that the polymeric product of desirable properties is obtained without the need for a deashing or an extraction step.

The polymerization product is a homopolymer when a single α-olefin monomer is polymerized. The process is useful of the production of copolymers or terpolymers when two or more α-olefins are polymerized such as in the production of EPR or polypropylene impact copolymers.

The polymerization can be conducted under polymerization conditions in the gas phase employing one or more fluidized beds of catalyst or as a slurry-phase process incorporating as diluent an inert material such as propane or a liquified monomer of the polymerization such as propylene. The process can be conducted in a batchwise manner or as a continuous or semi-continuous process. The molecular weight and to some extent the properties of the polymer product will be influenced by the provision of molecular hydrogen as is known in the art.

The invention will be further illustrated by reference to the following Examples.

### Example 1

In a 0.23 l (8-ounce) bottle were mixed 87.25 g of a CMEO solution in ethanol containing 125 mmol of Mg and 3.65 g of tetraethoxysilane. To the solution as it was stirred was added 17.38 g (125 mmol) of 4-nitrophenol dissolved in 17.4 g of ethanol. After stirring overnight at room temperature, the resulting slurry was filtered and the solids were washed with isooctane and dried under flowing nitrogen. The yield was 33.6 g of yellow granular crystals in the 2-14 »m range. A portion of that solid, 20 g, was added to 150 g of chlorobenzene and the mixture was boiled for about 1 hour while placed in a 164°C oil bath. The resulting solid was recovered by filtration, washed with isooctane and dried under nitogen. This second solid was more orange than was the solid before boiling.

### Example 2

To 90.8 g of a CMEO solution in ethanol (125 mmol Mg) was added 17.4 g (125 mmol) of 4-nitrophenol. After precipitation had begun the mixture was stirred at 60°C for 2 hours and then allowed to cool to room temperature. The resulting solid was recovered by filtration, washed with isooctane and dried under nitrogen. The yield was 28.7 g of crystalline particles having a size within the 15-20 »m range. A portion of those particles, 18.4 g, was added to 225 g tetraethoxysilane and the mixture was stirred for about 1 hour at 80°C and then heated to near boiling while being stirred for an additional 7 hours. The resulting solid was recovered by filtration, washed with isooctane and dried under flowing nitrogen. The yield of solid was 14 g.

### Example 3

Magnesium ethoxide (350 g, 3.06 mole) was mixed with 1113 g of ethanol containing 84.6 g of tetraethoxysilane and then dry ice chunks were added until a clear solution was obtained. To the solution while it was stirred was added 353.5 g (2.54 mole) of 4-nitrophenol dissolved in 320 g of ethanol. The mixture was stirred at 400-500 rpm overnight at room temperature. Two crops of solid were collected, washed once with ethanol, then with isooctane and dried under flowing nitrogen. The yield of spheroidal particles was 728.2 g (96%) and the particles were found to be in the 3-8 »m size range.
A. One procatalyst precursor was prepared by first boiling 20 g of the spheroidal particles in 150 g of chlorobenzene to produce 15.9 g of powder. An 11.1 g portion of that powder was boiled in 131 g of tetraethoxysilane to produce 9.4 g of a second powder.
B. A second procatalyst precursor was produced by boiling 20.67 g of the spheroidal particles for about one hour in 200 g of tetraethoxysilane. A yield of 15.6 g of a second powder was obtained.

### Example 4

Each procatalyst precursor product of Examples 1, 2, 3A and 3B was stirred with diisobutyl phthalate in a volume of 60 ml of a 50/50 by volume mixture of titanium tetrachloride/chlorobenzene for every 50 milliequivalents of magnesium precursor for 1 hour at 115°C. The resulting mixture was filtered while hot and the solids recovered thereby were washed twice with fresh 60 ml portions of the 50/50 mixture. The solids were then rinsed once with 125 ml of isooctane at 90°C and twice with isooctane at room temperature, and then dried overnight under flowing nitrogen. The proportions of procatalyst precursor and diisobutyl phthalate and the elemental composition of each procatalyst are shown in Table I wherein "Ratio" indicates the milliliters of diisobutyl phthalate used and the weight of procatalyst precursor in grams.

**TABLE I**

| Precursor from Example | Ratio (ml/g) | Composition, % wt. | | |
|---|---|---|---|---|
| | | Ti | Mg | Cl |
| 1 | 0.85/4.5 | 9.98 | 8.98 | 48.2 |
| 2 | 0.85/4.6 | 7.90 | 7.90 | 39.4 |
| 3A | 0.57/2.3 | 5.07 | 14.8 | 52.9 |
| 3B | 0.85/4.3 | 8.67 | 9.97 | 49.6 |

### Example 5

Each procatalyst produced by the procedure of Example 4 was converted to an olefin polymerization catalyst by mixing with triethyl aluminum cocatalyst and diisobutyldimethoxysilane as SCA. The catalysts were employed to polymerize propylene in a slurry-phase process in liquid propylene as diluent. The polymerizations took place in a 3.8 litre (1 U.S. gallon) autoclave for 1 hour at 67°C with 43 mmol of added hydrogen. The catalyst components were mixed in proportions to give an Al/Si/Ti molar ratio of 70/20/1. The mixing took place 20 minutes prior to the injection of the catalyst into the autoclave which had been heated to about 65°C. The results of these polymerizations are shown in Table II wherein "Productivity" refers to the yield of polypropylene polymer in kg of polymer/g of catalyst/hour. The term "BD" refers to bulk density of the polymer in g/cm³. The stereospecificity of the catalyst is measured by determining the percent by weight of xylene solubles (termed XS) in accordance with the regulations of the U.S. Food and Drug Administration. This test is conducted by dissolving a polymer sample in xylene under reflux in a flask. The flask is then immersed in a water bath at 25°C for 1 hour without stirring. During this time the insoluble portion precipitates and is then removed by filtration. An aliquot of the filtrate is evaporated, dried and weighed to enable calculation of the overall xylene solubles content. The xylene soluble portion consists primarily of amorphous (atactic) polymer with a small amount of low molecular weight crystalline polymer.

**TABLE II**

| Polymerization | Precursor Source of Catalyst (Example) | Productivity | XS | BD |
|---|---|---|---|---|
| 1 | 1 | 16.5 | 3.7 | 0.33 |
| 2 | | 18.9*** | 3.2 | 0.365 |
| 3 | 2 | 15.7 | 4.0 | 0.415 |
| 4 | | 14.2 | 3.1 | 0.45 |
| 5 | 3A | 11.3 | sticky | 0.399 |
| | | ** | | 0.434 |
| 6 | | 32.6 | sticky | 0.370 |
| | | ** | | 0.438 |
| 7 | 3B | 17.2 | -- | 0.365 |
| 8 | | 19.6* | 3.4 | 0.365 |

| | | | | |
|---|---|---|---|---|
| * Twice as much triethylaluminum used. | | | | |
| ** The sticky polymer was washed with isooctane and the BD re-measured. | | | | |
| *** Additional silane employed in polymerization reaction. | | | | |

### Example 6

The particle size distribution of the polymers produced by polymerizations conducted according to the procedure of Example 5 was determined by standard ASTM procedure by shaking in a set of wire sieves and compared with that obtained by use of a standard polypropylene catalyst wherein the procatalyst was produced from magnesium ethoxide. The results are shown in Table III wherein WAPS refers to the weight average particle size in »m, the term "mesh" followed by a number indicates the percentage of the particles retained by a wire mesh screen having openings equal to that number in size measured in »m, and range refers to the ratio of weight percent on the largest screen shown to the weight percent on the smallest shown, for each sample. The major distributions of size are indicated and the total for that range indicated in the final column, but all samples of polymer contained smaller proportions of particles of other sizes.

**TABLE III**

| Polymerization Procedure of Example 5 | WAPS | Mesh | Range | % in Range |
|---|---|---|---|---|
| 2 | 315 | 35% - 400 | 1.7 | 86 |
| | | 31% - 300 | | |
| | | 15% - 263 | | |
| | | 5% - 236 | | |
| 3 | 549 | 30% - 750 | 1.9 | 97 |
| | | 31% - 575 | | |
| | | 24% - 500 | | |
| | | 12% - 400 | | |
| 5 | 225 | 3% - 200 | 1.7 | 94 |
| | | 43% - 263 | | |
| | | 38% - 236 | | |
| | | 10% - 175 | | |
| 6 | 306 | 43% - 400 | 1.7 | 91 |
| | | 32% - 300 | | |
| | | 12% - 263 | | |
| | | 4% - 236 | | |
| 8 | 223 | 13% - 400 | 2.3 | 86 |
| | | 6% - 300 | | |
| | | 8% - 263 | | |
| | | 12% - 236 | | |
| | | 47% - 175 | | |
| Comparative | 678 | 38% - 1500 | 8.6 | 84 |
| | | 25% - 750 | | |
| | | 13% - 425 | | |
| | | 8% - 175 | | |

## Claims

1. A granular magnesium-containing solid comprising a reaction product of a carbonated magnesium ethoxide and a phenolic compound having 1 or 2 aromatic rings and 1 or 2 electron withdrawing groups as ring carbon atom substituents.

2. A solid according to claim 1 which is of the formula Mg(O₂C)(OEt)(A) · EtOH
wherein A is the anion of a nitrophenol.

3. A solid according to claim 2 wherein the nitrophenol is 4-nitrophenol.

4. An olefin polymerization procatalyst precursor obtainable by heating a solid as claimed in claim 1, 2 or 3.

5. An olefin procatalyst obtainable by contacting a halide of tetravalent titanium, a halohydrocarbon, an electron donor and a procatalyst precursor as claimed in claim 4.

6. An olefin polymerization catalyst obtainable by contacting a procatalyst as claimed in claim 5 with an organoaluminum cocatalyst and a selectivity control agent.

7. A catalyst according to claim 6 wherein the selectivity control agent is an alkyl ester of an aromatic monocarboxylic or dicarboxylic acid or an organosilane compound of the formula
R'ᵣSi(OR)₄₋ᵣ
wherein R' is alkyl or aryl, R is C₁-C₄ alkyl and r is 1 or 2.

8. A catalyst according to claim 6 or 7 wherein the organoaluminum compound is a trialkylaluminum and the selectivity control agent is ethyl p-ethoxybenzoate, diisobutylphthalate or diisobutyldimethoxysilane.

9. A process for polymerizing propylene or propylene and ethylene which comprises contacting propylene or propylene and ethylene with a catalyst as claimed in claim 6, 7 or 8.

## Patentansprüche

1. Körniger, Magnesium enthaltender Feststoff, der ein Reaktionsprodukt eines carbonatisierten Magnesiumoxids und einer phenolischen Verbindung mit 1 oder 2 aromatischen Ringen und 1 oder 2 Elektronen-ziehenden Gruppen als Substituenten an Kohlenstoffringatomen umfaßt.

2. Feststoff nach Anspruch 1, wobei dieser der Formel Mg(O₂C)(OEt)(A) · EtOH entspricht und A das Anion eines Nitrophenols ist.

3. Feststoff nach Anspruch 2, wobei das Nitrophenol 4-Nitrophenol ist.

4. Prokatalysatorvorläufer für die Olefinpolymerisierung, erhältlich durch Erwärmung eines Feststoffs, wie in den Ansprüchen 1, 2 oder 3 beansprucht.

5. Olefinprokatalysator, erhältlich durch Kontaktieren eines Halogenids, eines vierwertigen Titans, eines Halogenkohlenwasserstoffs, eines Elektronendonators und eines Prokatalysatorvorläufers, wie in Anspruch 4 beansprucht.

6. Katalysator für die Olefinpolymerisierung, erhältlich durch Kontaktieren eines Prokatalysators, wie in Anspruch 5 beansprucht, mit einem Organoaluminiumcokatalysator und einem Selektivitätssteuerungsmittel.

7. Katalysator nach Anspruch 6, wobei das Selektivitätssteuerungsmittel ein Alkylester einer aromatischen Monocarbonsäure oder Dicarbonsäure ist oder eine Organosilanverbindung mit der Formel
R'ᵣSi(OR)₄₋ᵣ
wobei R' Alkyl oder Aryl ist, R ist C₁-C₄-Alkyl und r ist 1 oder 2.

8. Katalysator nach Anspruch 6 oder 7, wobei die Organoaluminiumverbindung ein Trialkylaluminium ist und das Selektivitätssteuerungsmittel Ethyl-p-ethoxybenzoat, Diisobutylphthalat oder Diisobutyldimethoxysilan ist.

9. Verfahren zur Polymerisierung von Propylen oder Propylen und Ethylen, welches das Kontaktieren von Propylen oder Propylen und Ethylen mit einem Katalysator, wie in Anspruch 6, 7 oder 8 beansprucht, umfaßt.

## Revendications

1. Solide granulaire contenant du magnésium, comprenant le produit de réaction d'un éthylate de magnésium carbonaté et d'un composé phénolique comportant un ou deux cycles aromatiques et un ou deux groupes électro-attracteurs placés en tant que substituants sur des atomes de carbone du ou des cycles.

2. Solide conforme à la revendication 1, qui correspond à la formule Mg(O₂C)(OEt)(A)·EtOH dans laquelle A représente l'anion d'un nitrophénol.

3. Solide conforme à la revendication 2, dans lequel le nitrophénol est du 4-nitrophénol.

4. Précurseur de procatalyseur de polymérisation d'oléfines, qu'on peut obtenir en chauffant un solide conforme à la revendication 1, 2 ou 3.

5. Procatalyseur de polymérisation d'oléfines, qu'on peut obtenir en mettant en contact un halogénure de titane tétravalent, un hydrocarbure halogéné, un donneur d'électrons et un précurseur de procatalyseur conforme à la revendication 4.

6. Catalyseur de polymérisation d'oléfines, qu'on peut obtenir en mettant un procatalyseur conforme à la revendication 5 en contact avec un cocatalyseur organo-aluminique et un agent de maîtrise de la sélectivité.

7. Catalyseur conforme à la revendication 6, dans lequel l'agent de maîtrise de la sélectivité est un ester alkylique d'un acide aromatique monocarboxylique ou dicarboxylique, ou un organosilane de formule R'ᵣSi(OR)₄₋ᵣ dans laquelle R' représente un groupe alkyle ou aryle, R représente un groupe alkyle en C₁₋₄ et r vaut 1 ou 2.

8. Catalyseur conforme à la revendication 6 ou 7, dans lequel le composé organo-aluminique est un trialkyl-aluminium et l'agent de maîtrise de la sélectivité est du p-éthoxybenzoate d'éthyle, du phtalate de di-isobutyle ou du diisobutyl-diméthoxy-silane.

9. Procédé de polymérisation de propylène, ou de propylène et d'éthylène, qui comporte le fait de mettre du propylène, ou du propylène et de l'éthylène, en contact avec un catalyseur conforme à la revendication 6, 7 ou 8.
